# EUROPÄISCHE PATENTSCHRIFT

(11) **EP 0 778 170 B1**
(45) Veröffentlichungstag und Bekanntmachung des Hinweises auf die Patenterteilung: **15.09.1999**
(21) Anmeldenummer: 96119257.2
(22) Anmeldetag: 02.12.1996
(51) Int. Cl.: B60J 7/12, F16B 5/02

(54) **Einrichtung zur einstellbaren Befestigung eines Bauteils, insbesondere eines Faltverdecks an einem Fahrzeug**
Adjustable fixation device for a component, particularly a foldable top for vehicle
Dispositif pour la fixation avec réglage d'un componant, en particulier pour capote pliante de véhicule

(30) Priorität: 08.12.1995 DE 19545834
(43) Veröffentlichungstag der Anmeldung: 11.06.1997
(73) Patentinhaber: Bayerische Motoren Werke Aktiengesellschaft, 80788 München (DE)
(72) Erfinder: Kaun, Rupert, 94315 Straubing (DE); Hartwig, Wolfgang, 93073 Neutraubling (DE)

(56) Entgegenhaltungen:
- DE-A- 3 605 749
- DE-C- 4 412 431
- FR-A- 2 675 854

## Beschreibung

Die Erfindung betrifft eine Einrichtung zur einstellbaren Befestigung eines Bauteils, insbesondere eines Faltverdecks an einem Fahrzeug, mit den im Oberbegriff des Patentanspruches 1 angegebenen Merkmalen.

Eine derartige Einrichtung ist in der DE 36 05 749 A1 an einem Fahrzeug mit Faltverdeck vorgesehen und ermöglicht eine einstellbare Befestigung des Faltverdecks an der Fahrzeugkarosserie. Die Einrichtung weist drei im Durchmesser abgesetzte Einstellschrauben auf, die axial verstellbar von einem Gewinde an der Fahrzeugkarosserie oder an einer Trägerplatte aufgenommen sind, an der die Hauptsäule des Faltverdecks und der Hilfslenker abgestützt sind. Zur Einstellung der Trägerplatte in zwei zur Achse der Einstellschrauben senkrechte Richtungen durchsetzt ein von der Einstellschraube axial abstehender Gewindebolzen eine entsprechend größere Öffnung an der Fahrzeugkarosserie bzw. an der Trägerplatte. Ist die Trägerplatte bzw. das Faltverdeck in die vorgesehene Konstruktionslage eingestellt, wird durch Aufschrauben jeweils einer Gewindemutter auf den betreffenden Gewindebolzen ein Bereich der Trägerplatte bzw. ein Wandbereich der Fahrzeugkarosserie zwischen einer Stützschulter einer Einstellschraube und einer auf den Gewindebolzen aufgeschraubten Befestigungsschraube eingeklemmt und damit die Trägerplatte fixiert. Bei einem eventuell erforderlichen Ausbau des Faltverdecks ist die Trägerplatte erneut einzustellen, wofür ein entsprechender Zeitaufwand erforderlich ist.

Der Erfindung liegt die Aufgabe zugrunde, eine Einrichtung zur einstellbaren Befestigung eines Bauteils nach dem Oberbegriff des Patentanspruches 1 anzugeben, die den Montageaufwand beim wiederholten Montieren eines Bauteils vermindert.

Diese Aufgabe ist durch die im Patentanspruch 1 angegebenen Merkmale gelöst. Durch das zwischen dem Bauteil und den Gewindebolzen angeordnete Aufnahmeelement ist zwar der Montageaufwand beim erstmaligen Einstellen des Bauteils auf eine gewünschte Lage etwas erhöht, da einerseits das Aufnahmeelement mit den Gewindebolzen zu verbinden ist und andererseits eine Befestigung des Bauteils an dem Aufnahmeelement erfolgt, bei einer auf eine Demontage folgenden wiederholten Montage des Bauteils ist dieses jedoch lediglich mit dem Aufnahmeelement zu verbinden, da bei der Demontage das Aufnahmeelement mit den Gewindebolzen verbunden bleiben kann. Die zwischen dem Aufnahmeelement und dem Bauteil vorgesehene Zentriereinrichtung kann das Bauteil gegenüber dem Aufnahmeelement beispielsweise bei einer Annäherung dieser Teile zentrieren, wobei zur Verbindung des Bauteils mit dem Aufnahmeelement ein einziges Befestigungselement ausreichend sein kann.

Vorteilhafte Ausgestaltungen der Erfindung sind Gegenstand von Unteransprüchen.

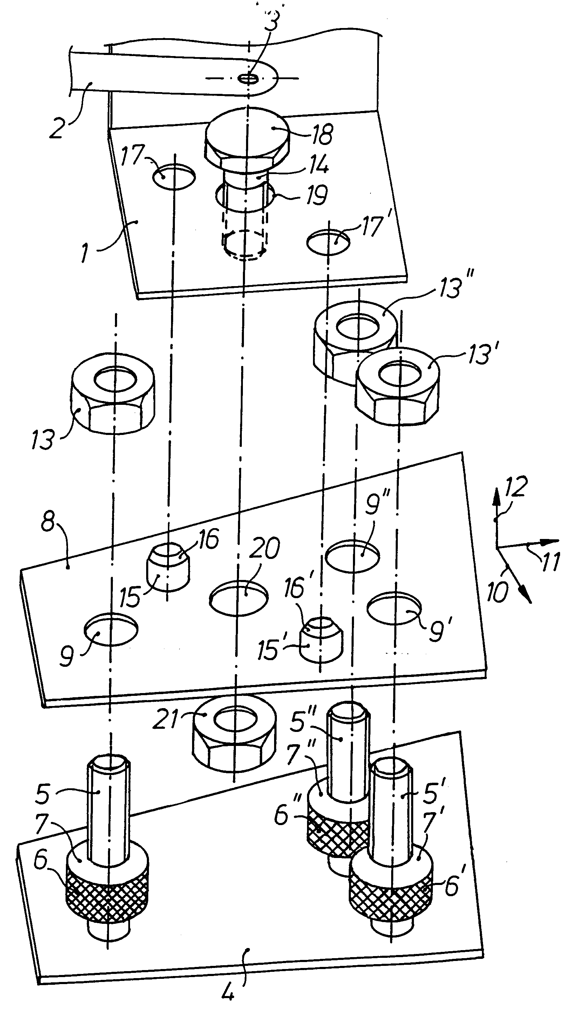

Ein Ausführungsbeispiel der Erfindung wird anhand einer Zeichnung mit einer einzigen Figur näher erläutert, die in Explosionsdarstellung die Befestigung einer Konsole darstellt, an der sich eine Hauptsäule eines Fahrzeugs mit Faltverdeck abstützt.

Die in der einzigen Figur dargestellte Einrichtung ist zur einstellbaren Befestigung einer Konsole 1 vorgesehen, an der sich die Hauptsäule 2 eines Fahrzeugs mit Faltverdeck beispielsweise um eine Achse 3 schwenkbar abstützt. Das nicht dargestellte Faltverdeck ist in ein hinteres Aufnahmefach einzubringen. In beiden Seitenbereichen des Aufnahmefaches ist jeweils eine etwa horizontal angeordnete Versteifungsplatte 4 an dem Boden des Aufnahmefaches befestigt. Von der Versteifungsplatte 4 stehen drei mit Abstand voneinander angeordnete Gewindebolzen 5, 5', 5'' nach oben ab, auf denen axial verstellbar Schraubelemente 6, 6', 6'' angeordnet sind, die an ihrer oberen Stirnseite Stützflächen 7, 7', 7'' bilden. Ein plattenförmiges Aufnahmeelement 8 weist drei Befestigungsöffnungen 9, 9', 9'' auf, die einen zum jeweiligen Durchmesser des Gewindebolzens 5, 5', 5'' größeren Durchmesser aufweisen, wodurch nach dem Aufstecken des Aufnahmeelements 8 auf die Gewindebolzen 5, 5', 5'' bis zum Anliegen an den Stützflächen 7, 7', 7'' das Aufnahmeelement 8 beispielsweise in Pfeilrichtung 10 oder in einer zur Pfeilrichtung 10 und zur Achse der zueinander parallelen Gewindebolzen 5, 5', 5'' senkrechten Richtung 11 gegenüber den Gewindebolzen 5, 5', 5'' verstellbar ist. Durch axiales Verstellen der Schraubelemente 6, 6', 6'' gegenüber den feststehenden Gewindebolzen 5, 5', 5'' läßt sich das Aufnahmeelement 8 in der Höhenrichtung 12 verstellen. Ist das Aufnahmeelement 8 in eine konstruktiv vorgesehene Lage eingestellt, so wird durch Aufschrauben von Befestigungsmuttern 13, 13', 13'' auf die Gewindebolzen 5, 5', 5'' das an den Stützflächen 7, 7', 7'' abgestützte Aufnahmeelement 8 zwischen den Befestigungsmuttern 13, 13', 13'' und den Schraubelementen 6, 6', 6'' lagefest festgeklemmt, wodurch die zuvor über eine Zentriereinrichtung und ein einziges Befestigungselement 14 an dem Aufnahmeelement 8 zentrierte und befestigte Konsole 1 lagegenau eingestellt ist. Bei einem eventuell erforderlichen Ausbau des Faltverdecks ist lediglich die Konsole 1 von dem Aufnahmeelement 8 zu lösen und nachfolgend bei einer erneuten Montage lediglich mit dem Aufnahmeelement 8 zu verbinden. Die Zentriereinrichtung ist bei dem Ausführungsbeispiel durch zwei mit Abstand voneinander von dem Aufnahmeelement 8 nach oben abstehende Zentrierbolzen 15, 15' gebildet, die jeweils eine Zentrierschräge 16, 16' aufweisen. In der Konsole 1 sind in einem dem Abstand der Zentrierbolzen 15, 15' entsprechenden Abstand zwei an die Durchmesser der Zentrierbolzen 15, 15' angepaßte Zentrieröffnungen 17, 17' ausgebildet. Durch Annäherung der Konsole 1 an das Aufnahmeelement 8 werden beispielsweise unter Mitwirkung der Zentrierschrägen 16, 16' die Zentrieröffnungen 17, 17' von den Zentrierbolzen 15, 15' durchsetzt, wodurch die Konsole 1 gegenüber dem Aufnahmeelement 8 zentriert wird. Für eine Befestigung der Konsole 1 an dem Aufnahmeelement 8 ist in diesem Fall lediglich ein einziges Befestigungselement 14 erforderlich, das im vorliegenden Fall eine Befestigungsschraube 18 mit einem radial erweiterten Kopfteil ist, die mit ihrem Schaft eine Durchtrittsöffnung 19 in der Konsole 1 und eine hierzu fluchtende Befestigungsöffnung 20 im Aufnahmeelement 8 durchsetzt und unter dem Aufnahmeelement 8 mit einer Gewindemutter 21 zu verbinden ist.

Die Erfindung ist auch von dem Ausführungsbeispiel abweichend auszuführen. Zur Fixierung des Aufnahmeelements an den Gewindebolzen sind bereits zwei Gewindebolzen ausreichend. Die im Durchmesser gegenüber den Gewindebolzen größeren Befestigungsöffnungen können auch durch Langlöcher oder dergleichen gebildet sein. Vorzugsweise ist das Aufnahmeelement gegenüber den Gewindebolzen räumlich einstellbar. Ist lediglich eine Einstellung des Aufnahmeelements gegenüber den Gewindebolzen in einer oder in zwei beispielsweise zueinander senkrechten Richtungen gewünscht, so können die Befestigungsöffnungen in der betreffenden Richtung, in der keine Einstellung gegenüber den betreffenden Gewindebolzen erforderlich ist, lediglich eine dem Durchmesser des betreffenden Gewindebolzens entsprechende Weite aufweisen. Falls eine axiale Einstellung des Aufnahmeelements gegenüber den Gewindebolzen nicht erforderlich ist, können die Stützflächen auch durch mit den betreffenden Gewindebolzen oder einem Wandelement, beispielsweise der Versteifungsplatte fest verbundene Elemente gebildet sein. Die Versteifungsplatte kann entfallen, wenn die Gewindebolzen ausreichend stabil an einem Wand- oder Tragelement befestigt sind. Die Zentriereinrichtung kann durch beliebige Zentrierelemente gebildet sein, wobei wenigstens ein Zentrierelement vorzusehen ist. Die Zentrierelemente können auch durch Befestigungselemente gebildet sein, die beispielsweise beim Einstecken oder Durchstecken durch entsprechende Befestigungsöffnungen das Bauteil gegenüber dem Aufnahmeelement zentrieren. Die Achsen der Gewindebolzen können in eine beliebige Richtung verlaufen. Bei Verwendung einer Versteifungsplatte, kann diese eine beliebige Lage einnehmen. Das einstellbar zu befestigende Bauteil, das Aufnahmeelement und eine eventuell verwendete Versteifungsplatte können beliebig geformt sein. Das Bauteil kann ein beliebiges Bauteil sein, bei dem anzunehmen ist, daß es mehrmals zu montieren ist.

## Patentansprüche

1. Einrichtung zur einstellbaren Befestigung eines Bauteils (1), insbesondere eines Faltverdecks an einem Fahrzeug, mit zwei von einem Tragglied (4) abstehenden Gewindebolzen (5, 5', 5''), die jeweils eine axiale Stützfläche (7, 7', 7'') für ein Aufnahmeelement (8) bilden, das mit zu dem Gewindebolzen (5, 5', 5'') im Durchmesser größeren Befestigungsöffnungen (9, 9', 9'') auf die Gewindebolzen (5, 5', 5'') aufgesteckt und durch Aufschrauben von Befestigungsmuttern (13, 13', 13'') auf die Gewindebolzen (5, 5', 5'') an den Stützflächen (7, 7', 7'') abgestützt an dem Tragglied (4) befestigt ist,
dadurch gekennzeichnet, daß die Stützfläche (7, 7', 7'') durch ein an dem Gewindebolzen (5, 5', 5'') axial verstellbares Schraubelement (6, 6', 6'') gebildet ist und das Bauteil (1) über eine lageausrichtende Zentriereinrichtung (15, 15') und wenigstens ein Befestigungselement (14) mit dem Aufnahmeelement (8) lösbar zu verbinden ist.

2. Einrichtung nach Anspruch 1, mit drei mit Abstand voneinander angeordneten Gewindebolzen,
dadurch gekennzeichnet, daß die Gewindebolzen (5, 5', 5'') parallel zueinander angeordnet sind.

3. Einrichtung nach Anspruch 1 oder 2,
dadurch gekennzeichnet, daß das Tragglied eine mit einem Wandbereich verbundene Versteifungsplatte (4) ist.

4. Einrichtung nach einem der Ansprüche 1 bis 3,
dadurch gekennzeichnet, daß das Bauteil eine Konsole (1) ist, an der ein Säulenelement (2) und/oder ein Lenker eines an einem Fahrzeug vorgesehenen Faltverdecks oder Faltdaches angelenkt ist.

5. Einrichtung nach Anspruch 3 oder 4,
dadurch gekennzeichnet, daß die Versteifungsplatte (4) horizontal angeordnet ist und die Gewindebolzen (5, 5', 5'') von der Versteifungsplatte (4) nach oben abstehen.

6. Einrichtung nach einem der Ansprüche 1 bis 5,
dadurch gekennzeichnet, daß das Bauteil (1) eine Durchtrittsöffnung (19) für den Schaft einer Befestigungsschraube (14) aufweist, die in ein Befestigungsgewinde im Aufnahmeelement eingeschraubt ist oder eine Befestigungsöffnung (20) im Aufnahmeteil (8) durchsetzt, wobei auf die aus der Befestigungsöffnung (20) hervorstehende Befestigungsschraube (18) eine Gewindemutter (21) aufgeschraubt ist.

7. Einrichtung nach einem der Ansprüche 1 bis 6,
dadurch gekennzeichnet, daß die Zentriereinrichtung einen von dem Bauteil oder von dem Aufnahmeelement (8) abstehenden Zentrierbolzen (15, 15') aufweist, der in eine Zentrieröffnung (17, 17') an dem anderen Teil, an dem Aufnahmeelement oder an dem Bauteil (1) eingreift.

## Claims

1. A device for adjustably fastening a component (1), especially a folding top, to a vehicle, comprising two threaded bolts (5, 5', 5'') projecting from a supporting element (4) and each forming an axial bracing surface (7, 7', 7'') for a receiving element (8) which has fastening openings (9, 9', 9'') greater in diameter than the threaded bolts (5, 5', 5'') and is mounted on the said bolts (5, 5', 5'') and fastened to the supporting element (4) and braced against the surfaces (7, 7', 7'') by screwing fastening nuts (13, 13', 13'') on to the threaded bolts (5, 5', 5''),
characterised in that the bracing surface (7, 7', 7'') is formed by a screw element (6, 6', 6'') axially adjustable on the threaded bolts (5, 5', 5'') and the component (1) is releasably connected to the receiving element (8) via a position-aligning centring device (15, 15') and at least one fastening element (14).

2. A device according to claim 1, comprising three spaced-apart threaded bolts,
characterised in that the threaded bolts (5, 5', 5'') are disposed parallel to one another.

3. A device according to claim 1 or claim 2,
characterised in that the supporting element is a reinforcing plate (4) connected to a wall region.

4. A device according to any of claims 1 to 3,
characterised in that the component is a bracket (1) pivotably mounted to a column element (2) and/or a guide rod for a folding top or folding roof provided on a vehicle.

5. A device according to claim 3 or claim 4,
characterised in that the reinforcing plate (4) is horizontally disposed and the threaded bolts (5, 5', 5'') project upwards from the reinforcing plate (4).

6. A device according to any of claims 1 to 5,
characterised in that the component (1) has a passage opening (19) for the shank of a fastening screw (14) which is screwed into a fastening thread in the receiving element or extends through a fastening opening (20) in the receiving part (8), wherein a threaded nut (21) is screwed on to the fastening screw (18) projecting from the fastening opening (20).

7. A device according to any of claims 1 to 6,
characterised in that the centring device is a centring bolt (15, 15') projecting from the component or from the receiving element (8) and engaging in a centring opening (17, 17') on the other part, on the receiving element or on the component (1).

## Revendications

1. Installation pour fixer de manière réglable une pièce (1), notamment une capote pliante de véhicule automobile comprenant deux tiges filetées (5, 5, ,5'') en saillie par rapport à l'élément de support (4), ces tiges formant chacune une surface d'appui axiale (7, 7', 7'') pour un élément de réception (8) qui est engagé sur ces tiges filetées (5, 5', 5'') par des orifices de fixation (9, 9', 9'') de diamètre plus grand que celui des tiges filetées (5, 5', 5''), et se fixe sur l'organe de support (4) par vissage d'écrous de blocage (13, 13, 13'') sur les tiges filetées (5, 5', 5'') en s'appuyant sur les surfaces d'appui (7, 7', 7''),
caractérisée en ce que
les surfaces d'appui (7, 7', 7'') sont formées par un écrou (6, 6', 6'') réglable axialement sur les tiges filetées (5, 5', 5''), et la pièce (1) est reliée de manière amovible à l'élément de réception (8) par une installation de centrage de position (15, 15') et au moins un élément de fixation (14).

2. Installation selon la revendication 1, comprenant trois tiges filetées distantes l'une de l'autre,
caractérisée en ce que
les tiges filetées (5, 5', 5'') sont parallèles.

3. Installation selon l'une quelconque des revendications 1 ou 2,
caractérisée en ce que
l'élément de support est une plaque de rigidification (4) reliée à une zone de paroi.

4. Installation selon l'une des revendications 1 à 3,
caractérisée en ce que
la pièce est une console (1) sur laquelle est articulé un élément de montant (2) et/ou un bras d'une capote pliante ou d'un toit pliant d'un véhicule.

5. Installation selon la revendication 3 ou 4,
caractérisée en ce que
la plaque de rigidification (4) est horizontale et les tiges filetées (5, 5', 5'') sont en saillie vers le haut sur la plaque de rigidification (45).

6. Installation selon l'une des revendications 1 à 5,
caractérisée en ce que
la pièce (1) comporte un orifice traversant (19) pour le corps d'une vis de fixation (14) vissée dans un filetage de fixation de l'élément de réception, ou traverse une ouverture de fixation (20) de la pièce de réception (8) et, sur la vis de fixation (18) en saillie de l'orifice de fixation (20), se visse un écrou (21).

7. Installation selon l'une des revendications 1 à 6,
caractérisée en ce que
l'installation de centrage comporte un goujon de centrage (15, 15') en saillie sur la pièce ou l'élément de réception (8), ce goujon pénétrant dans une ouverture de centrage (17, 17') de l'autre partie, de l'élément de réception ou de la pièce (1).
